(19)

Europäisches
Patentamt

European
Patent Office

Office européen
des brevets

(11) **EP 2 862 157 B1**

(12) **EUROPEAN PATENT SPECIFICATION**

(45) Date of publication and mention
of the grant of the patent:
**06.11.2019 Bulletin 2019/45**

(21) Application number: **13803814.6**

(22) Date of filing: **13.06.2013**

(51) Int Cl.:
*G08G 1/16* *(2006.01)*    *B60W 30/16* *(2012.01)*
*B61L 23/34* *(2006.01)*    *G05D 1/02* *(2006.01)*
*G08G 1/00* *(2006.01)*    *B60W 50/00* *(2006.01)*

(86) International application number:
**PCT/SE2013/050687**

(87) International publication number:
**WO 2013/187839 (19.12.2013 Gazette 2013/51)**

(54) **SYSTEM AND METHOD PERTAINING TO VEHICLE TRAINS**

SYSTEM UND VERFAHREN IN ZUSAMMENHANG MIT ANTRIEBSZÜGEN

SYSTÈME ET PROCÉDÉ CONCERNANT DES TRAINS DE VÉHICULES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **14.06.2012 SE 1250630**

(43) Date of publication of application:
**22.04.2015 Bulletin 2015/17**

(73) Proprietor: **Scania CV AB
151 87 Södertälje (SE)**

(72) Inventors:
• **KEMPPAINEN, Josefin
S-126 35 Hägersten (SE)**
• **NILSSON, Sanna
S-783 34 Säter (SE)**
• **PETTERSSON, Hanna
S-713 92 Gyttorp (SE)**
• **AL ALAM, Assad
S-121 31 Enskededalen (SE)**

• **PETTERSSON, Henrik
S-141 73 Segeltorp (SE)**

(74) Representative: **Scania CV AB
Patents, GP 117kv
151 87 Södertälje (SE)**

(56) References cited:
**EP-A1- 2 402 924        WO-A1-2011/128739
WO-A1-2012/014040        JP-A- 2011 250 021
US-A- 6 032 097          US-A1- 2008 186 382
US-B2- 8 077 077**

• **NAGA VISHNUKANTH IRUKULAPATI: "Sensor
Fusion for Vehicular Networks Master Thesis in
Communication Engineering", MASTER THESIS
IN COMMUNICATION ENGINEERING, 1 January
2011 (2011-01-01), XP055181776,**
• **NAGA VISHNUKANTH IRUKULAPATI: 'Sensor
Fusion for Vehicular Networks' MASTER THESIS
IN COMMUNICATION ENGINEERING 2011,
XP055181776**

## Description

Field of the invention

The present invention relates to techniques in the context of a vehicle train, and in particular to techniques for identifying vehicles in a vehicle train.

Background to the invention

The already high traffic volume on Europe's major roads is expected to increase still further. The energy required for carrying freight on these roads is also enormous and growing. A possible contribution to solving these problems is to have trucks travel close together in so-called vehicle trains ("platoons"). Travelling close together in a vehicle train considerably lowers the air resistance to trucks, reduces their energy requirements and uses the transport system more efficiently. Vehicle train means here a number of vehicles travelling with close spacing between them and as a unit. Studies have shown that the fuel consumption of a train's leading vehicle may be reduced by 2-10% and that of the following vehicle by 15-20%, as compared with a lone vehicle. These figures are based on the distance between the trucks being 8-16 metres and on travelling at 80 km/h. The lower fuel consumption means a corresponding reduction in $CO_2$ emissions.

These well-known facts are currently already being put to advantage by drivers, with consequently lowered traffic safety. A fundamental issue concerning vehicle trains is how to reduce the time gap between vehicles from a recommended 3 seconds to between 0.5 and 1 second without affecting traffic safety. The recommended time gap is currently based on

- driver reaction time
- delays in vehicle brake systems
- vehicle stopping distances

Driver reaction time can be eliminated by using distance sensors and cameras, ACC (adaptive cruise control) and LKA (lane keeping assistance) being examples of techniques already employed today. There is however a limitation in that distance sensors and cameras need a clear view of the target, making it difficult to detect what is happening more than a couple of vehicles ahead in the queue. A further limitation is that they cannot react proactively, i.e. react to occurrences which have had no marked effect on the pace of traffic.

A development of IEEE standard 802.11 for WLAN (wireless local area networks) called 802.1 lp allows wireless transmission of information between vehicles, and between vehicles and infrastructures. Various kinds of information may be sent to and from the vehicles, e.g. vehicle parameters and strategies. A vehicle ahead in a train may thus for example

- send information about its own state, i.e. weight, speed, power output, location, etc.,
- send information about forms of action which affect nearby traffic, e.g. braking,
- acting as a probe for vehicles behind by passing reports about traffic occurrences rearwards in the vehicle train.

This access to information makes it possible to create new functions, e.g. for helping drivers to drive more efficiently and more safely. The development of communication techniques has made it possible to design trucks and infrastructures which support the use of vehicle trains. A vehicle train can operate as a unit, thereby damping fluctuations in the train caused by speed changes and consequently allowing closer spacing and better overall traffic flow.

The creation of vehicle trains does however give rise to other kinds of problems. A basic problem with systems which handle information about the surroundings from both on-board sensors, e.g. radar and cameras, and information sent from other vehicles, e.g. via wireless communication, is assessing whether the information pertains to the same vehicle. This is problematical in that information from on-board sensors and information sent via wireless communication may diverge, e.g. because of the length of the vehicle and the locations on it of the on-board sensors. Further problems may arise in traffic situations in which a non-transmitting vehicle moves into the train. There is therefore need for a functionality for assessing whether the information comes from the same vehicle and the divergences are due to physical characteristics, or whether the information comes from two different vehicles.

US-2008186382-A1 describes comparing distance data from radar with distance data from wireless communication in order to measure the spacing between vehicles.

US-8077077-B2 describes a recognition system for a vehicle for determining whether information from a plurality of sources pertains to the same vehicle. Location information from radar is compared with wirelessly communicated location information, and data which differ by less than a certain threshold value are regarded as pertaining to the same vehicle. A predetermined length for the vehicle is used to be able to compare the location information from the various sources. The document from NAGA VISHNUKANTH IRUKULAPATI: "Sensor Fusion for Vehicular Networks Master Thesis in Communication Engineering" discloses a real time sensor fusion system for the application of vehicle platooning wherein sensor signals are filtered to assure the robustness of the system.

However, the length of a vehicle may vary greatly, e.g. depending on whether it has one or more trailers or not. The object of the invention is therefore to propose an improved system for identifying vehicles without having to know the length of the vehicle which is to be identified.

Summary of the invention

In one aspect the object described above is at least partly achieved by a system in the context of a vehicle train which comprises at least two vehicles adapted to communicating via wireless communication. The system comprises a processor unit adapted to receiving wirelessly from at least the more forward of the two vehicles data which comprise at least one vehicle parameter for the vehicle. The processor unit is further adapted to receiving data from a detector unit on board the rear vehicle, which detector unit is adapted to measuring a relative vehicle parameter between the forward vehicle and the rear vehicle. The processor unit is then adapted to estimating a vehicle state for the forward vehicle on the basis of at least a model of the vehicle and said vehicle parameters, and to generating a state signal which indicates said estimated vehicle state.

The invention makes it possible to estimate the length and/or speed of a moving vehicle. This information may be usable by various systems on board the vehicle, e.g. to detect that the vehicle in front has an erroneous speed indication or to identify that an unknown vehicle has moved in between the train's two vehicles.

In a second aspect, the object described above is at least partly achieved by a method in the context of a vehicle train which comprises at least two vehicles adapted to communicating via wireless communication. The method comprises the steps of i) receiving wirelessly from at least the more forward of the two vehicles data which comprise at least one vehicle parameter for the vehicle, ii) measuring a relative vehicle parameter between the rear vehicle and the forward vehicle and iii) estimating a vehicle state of the forward vehicle on the basis of at least a model of the vehicle and said vehicle parameters.

In a third aspect, the object described above is at least partly achieved by a computer programme product comprising programme instructions for enabling a computer system to perform steps according to the method described above and according to method steps in the detailed description, when the programme instructions are run on the computer system.

Preferred embodiments are described in the dependent claims and in the detailed description.

Brief description of the attached drawings

The invention is described below with reference to the attached drawings, in which:

Figure 1 is a schematic diagram of a vehicle notation herein used for a vehicle train.
Figure 2 is a block diagram of the system for regulation of vehicles in a vehicle train according to an embodiment of the invention.
Figure 3 is a block diagram of the system for regulation of vehicles in a vehicle train according to another embodiment of the invention.
Figures 4A and 4B illustrate how an unknown vehicle may be categorised according to an embodiment of the invention.
Figure 5 is a schematic diagram of how centralised control works.
Figure 6 is a schematic diagram of how decentralised control works.

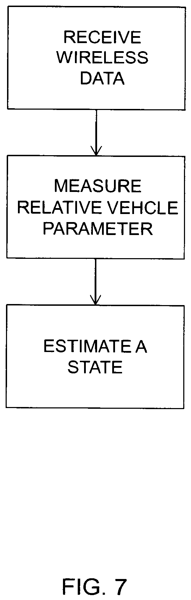

Figure 7 is a schematic diagram illustrating a method for regulating vehicles in a vehicle train according to an embodiment of the invention.

Detailed description of preferred embodiments of the invention

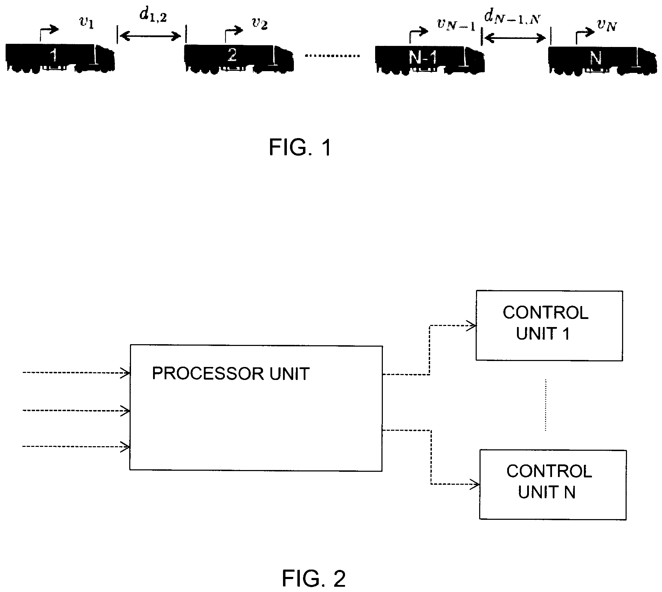

A vehicle train is defined as a number of vehicles working as a unit. The vehicles belonging to the train are each controlled automatically in the longitudinal direction and communicate with one another through a wireless network. Figure 1 is a schematic diagram of a vehicle notation herein used for a vehicle train. The host vehicle has the notation 1 and the vehicles in front the notation 2,...N. The host vehicle may also be referred to as EGO and vehicle N as the leader vehicle. These notations are local for each vehicle in the train. The relative distance and speed between vehicle 1 and vehicle 2 are referred to as $d_{1,2}$, $v_{1,2}$ etc. Vehicle 1 has the speed $v_1$ etc. The general purpose of vehicle trains is to keep the vehicles as close to one another as possible by regulating their cruise controls and brake systems in order to take advantage of positive effects such as reduced air resistance.

By vehicle-to-vehicle communication (V2V communication), information may be obtained wirelessly from nearby vehicles. To this end, the vehicles are provided with units adapted to receiving and sending information wirelessly. A further way of communicating is via vehicle-to-infrastructure communication (V2I communication), whereby vehicles can exchange information wirelessly with, for example, roadside units with built-in intelligence.

Figure 2 is a block diagram of the system for identifying vehicles in the context of vehicle trains according to an embodiment of the invention. For the sake of simplicity, the system is exemplified with a vehicle train which comprises only two vehicles, but it may of course comprise more than two. The system comprises a processor unit which may for example be on board one of the train's vehicles or in an externally located unit. In one embodiment each of the train's vehicles is provided with a processor unit according to the invention. It is implicit that the system also comprises memory space connected to the processor unit, e.g. to store necessary data and instructions. The processor unit comprises also one or more processors which can execute machine code.

The processor unit is adapted in one embodiment to receiving wirelessly from at least the more forward of the two vehicles data which contain at least one vehicle parameter for the vehicle. The data transmitted wirelessly comprise in one embodiment not only vehicle parameters but also identification data which indicate which vehicle or vehicles the vehicle parameters come from. The wireless data take the form in Figure 2 of wireless signals represented by the broken lines reaching the processor unit. The signals contain in one embodiment data packets with associated identification indicating which vehicle the packet originates from. The rate at which the signals are received by the vehicles is for example 10 Hz. In one embodiment each vehicle has a specific ID number which is directly related to it and serves to identify a data packet. Each vehicle which forms part of a train is also provided, in one embodiment, with a specific train ID which may for example be the leader vehicle's ID number. The system is preferably adapted to using said identification data to check and keep track of which vehicle data come from.

The processor unit is further adapted to receiving data from a detector unit on board the rear vehicle, which detector unit is adapted to measuring a relative vehicle parameter between the forward vehicle and the rear vehicle. The detector unit may for example be a radar unit, a lidar unit or a camera unit capable of providing information about the relative spacing, the relative speed and/or the acceleration between the vehicles. If the processor unit is on board a vehicle, data may for example be obtained via a network on board. A usual network employed in vehicles is CAN (control area network). Information such as the engine's torque, the vehicle's weight, odometer data, direction and/or yaw rate are usually also readable from CAN. Information from CAN is read in one embodiment at a rate of 100 Hz. Data on the network come from data sent wirelessly from other vehicles and from sensors on board the host vehicle. GPS (global positioning system) is a satellite navigation system which gives the vehicle's position in coordinates of longitude and latitude and its speed to a GPS receiver on board. Each of the train's vehicles preferably has a GPS unit, with a GPS receiver. The location of the vehicle may then be sent to other vehicles via wireless communication.

The processor unit is further adapted to estimating a vehicle state for the forward vehicle on the basis of at least a model of the vehicle and said vehicle parameters, and to generating a state signal which indicates said estimated vehicle state. The estimation may be by various methods but will here be exemplified by extended Kalman filtering. The processor unit in this embodiment is therefore adapted to using extended Kalman filtering in the estimation of vehicle states. The vehicle state may for example be the length, speed, position and/or acceleration of the forward vehicle.

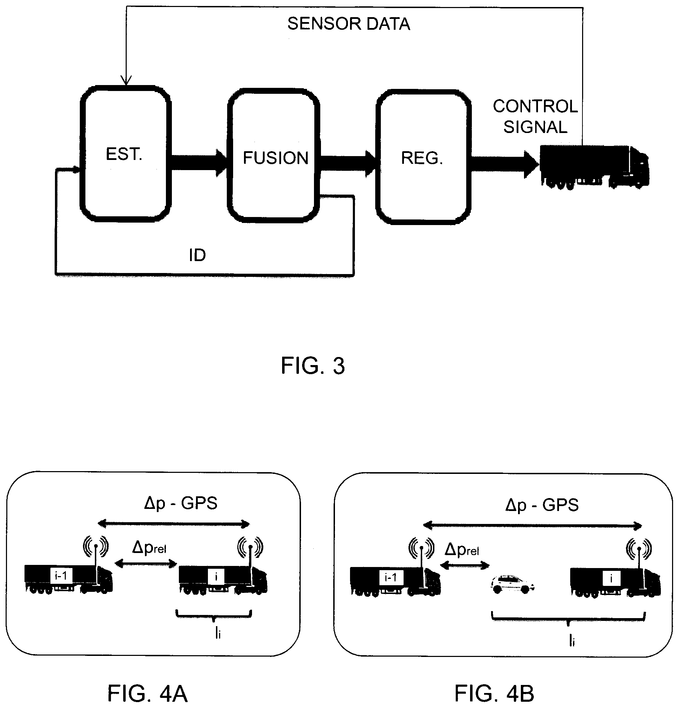

Figure 3 is a schematic diagram of a system for regulation of the vehicles in a vehicle train according to an embodiment of the invention. The processor unit comprises in this embodiment three function units, as will be explained below. This strategy is only to be regarded as an example, and other strategies are applicable within the context of the invention. The first unit, the "EST." unit, receives data from, for example, a network on board the vehicle. In one embodiment said data therefore comprise identification data indicating which vehicle said data come from. In one embodiment states for one or more vehicles are also estimated in the EST. unit, and check values are calculated for each state. This estimation and calculation of check values may for example involve using an extended Kalman filter. Sensor data from known sources tagged with identification data are fusioned in order to estimate for example vehicle states in terms of the location, speed and direction of the vehicles. Known sources comprise for example wireless data containing identification data. The EST. unit therefore receives monitored raw data and verifies inter alia that they are relevant for further estimations before they go into the next two blocks.

In the "FUSION" unit depicted in Figure 3, sensor values which are identifiable by marking, e.g. wireless data comprising identification data, are then fusioned with sensor data which are unmarked, e.g. data from radar, lidar or cameras. The fusion involves estimation of states, which in one embodiment comprise the location, speed and/or length of the train's vehicles which are to be covered by the regulation. An ID vector for all of the vehicles which are specified to be estimated is then fed back to the EST. unit, as illustrated by "ID" in Figure 3. The ID vector comprises the identity of the vehicles which are specified to be estimated. The fusion may for example be conducted with an extended Kalman filter (EKF), as described below.

Extended Kalman filter

EKF is a filter which can handle non-linearities in models. The filtering involves a prediction step also called time update based on a physical model (1) of the vehicle, the previous information about states, and the sampling time. The vehicle model (1) depicted by way of example expresses the acceleration of vehicle i as

$$a_i = \frac{r_\omega^2}{J_\omega + mr_\omega^2 + i_t^2 i_f^2 \eta_t \eta_f J_e} \left( \frac{i_t i_f \eta_t \eta_f}{r_\omega} T_e - \frac{c_d A_a \rho_a v^2}{2} + \frac{c_d A_a \rho_a v^2}{2} \cdot \frac{f_i(d)}{100} - \right.$$

$$crmg\cos\alpha - mg\sin\alpha \tag{1}$$

in which $r_w$ is the vehicle's wheel radius, $J_\omega$ the vehicle's wheel inertia, m the vehicle's weight, $i_t$ the vehicle's transmission ratio of current gear, $i_f$ the vehicle's transmission ratio for the final gear, $\eta_t$ an efficiency constant for current gear, $\eta_f$ an efficiency constant for the final gear, $J_e$ the engine's moment of inertia, $T_e$ the engine torque, $c_d$ the air draught coefficient, $A_a$ the vehicle's front cross-sectional area, $\rho_a$ the air density, v the vehicle's speed, $f_i(d)$ a function for vehicle i's reduction of the air draught coefficient, $c_r$ the vehicle's rolling coefficient, g the gravitational constant and $\alpha$ the gradient of the road. The model is then discretised in order to be usable in the estimation. The description of EKF set out below uses for the sake of simplicity a general model (2) for the vehicle's movement, which may therefore be matched by a discretised variant of model (1).

A general model of a non-linear movement model in discrete time is represented by

$$\hat{x}_{k+1} = f(\hat{x}_k, u_k, \theta, v_k) \tag{2}$$

in which $\hat{x}_k$ is the estimated state vector, $u_k$ input signals, $\theta$ model parameters and $v_k$ process noise. The time update involves predicting states (3) and the associated covariance (4) as

$$\hat{x}_{k|k-1} = f(\hat{x}_{k-1|k-1}, u_{k-1}, \theta, v_{k-1}) \tag{3}$$

$$P_{k|k-1} = F_k P_{k|k} F_k^T + Q_k \tag{4}$$

in which

$$F_{k-1} = \frac{\partial f}{\partial x}|_{\hat{x}_{k-1|k}, u_{k-1}} \tag{5}$$

and $Q_k$ is the covariance matrix for $v_k$. Thus $Q_k$ describes the model's uncertainty and may be weighted according to how well the model corresponds to reality.

The next step is to compare the predicted states with measured values for them, a step also called measurement update. This comparison involves using a model for the measured values according to

$$y_k = h(\hat{x}_k, u_k, \theta, e_k) \tag{6}$$

in which $y_k$ represents the now pre-processed measured values in vector format and $e_k$ the measuring noise. The measurement update then involves comparing the pre-processed measured values with the estimated state vector from the time update according to

$$\varepsilon_k = y_k - h(\hat{x}_{k|k-1}) \tag{7}$$

The covariance $S_k$ for the measured value residual $\varepsilon_k$ is calculated as

$$S_k = H_k P_{k|k-1} H_k^T + R_k \qquad (8)$$

in which $P_k$ is the covariance for states, $H_k$ is calculated as

$$H_k = \frac{\partial h}{\partial x}\big|_{\hat{x}_{k|k-1}} \qquad (9)$$

and $R_k$ is the covariance matrix for the measuring noise $e_k$. $R_k$ is the corresponding weight matrix to $Q_k$ and is adjustable according to the uncertainty of the sensor measured values. The estimated state update $\hat{x}_k$ is then calculated as

$$\hat{x}_{k|k} = \hat{x}_{k|k-1} + K_k \varepsilon_k \qquad (10)$$

 in which the Kalman amplification K is

$$K_k = P_{k|k-1} H_k^T S_k^{-1} \qquad (11)$$

The covariance matrix P for the estimated states is updated as

$$P_{k|k} = (I - K_k H_k) P_{k|k-1} \qquad (12)$$

The input signals to model (2) in the filter which are used in the FUSION unit comprise the vector

$$u_k = [T_e \quad \phi \quad \alpha]^T \qquad (13)$$

in which $T_e$ (the vehicle's engine torque), $\phi$ (the vehicle's direction) and $\alpha$ (road gradient) are obtained from data via wireless communication.

The measurements reaching the FUSION unit come from two different sources. The first source is the EST. unit, which gives an estimated location $z_p$ and speed $z_v$ for each vehicle, e.g. on the basis of sensor measurements from the host vehicle and wireless data. The second source is here radar, which provides a relative distance $z_{prel}$ and a relative speed $z_{vrel}$ relative to the vehicle in front. The measurement signals to the filter represent the vector (14) which may then be expressed as

$$z_k = [z_p \quad z_v \quad z_{p_{rel}} \quad z_{v_{rel}}]^T \qquad (14)$$

The calculations in EKF may then be conducted either on the basis of a global reference system which covers all of the train's vehicles and uses GPS coordinates in the form of longitude and latitude to describe the locations of the vehicles, or a local reference system arrived at by coordinate transformation of the global coordinate system. In the local reference system the host vehicle EGO is the origin. Depending on which reference system is used, measurement equations $h(\hat{x})$ may be expressed and are then used in the measurement update according to (6) above. The measurement equations use the measurement signals from the vector (14).

The processor unit is adapted in one embodiment to determining for the estimation a check value which indicates whether the wirelessly transmitted information and the relative vehicle parameter originate from the same vehicle, e.g. by determining the covariance between data from the two sources, as illustrated by (12) above. If the check value, i.e. in this case the covariance, for the estimated state increases above a certain threshold value, this indicates that data from the different sources do not come from the same vehicle. It may signify that an unknown vehicle has moved in between the two vehicles, which vehicle may then be identified.

The estimation in the FUSION unit makes it possible to estimate for example the forward vehicle's length, which may be usable data for many applications. As the length of trucks often changes, depending on how many trailers they have and the length of the trailers, matters are facilitated if it is possible to calculate the length instead of measuring it. The processor unit is adapted in one embodiment to analysing the estimated vehicle state according to predetermined rules which comprise calculating a difference $\Delta$ between the estimated state and a predetermined state, comparing the

difference $\Delta$ with a predetermined threshold value and determining a difference signal on the basis of the result of the comparison. In one embodiment said estimated vehicle state comprises an estimated length of the forward vehicle. Figures 4A and 4B exemplify how an unknown vehicle may be identified by monitoring the length of vehicle k in front. The respective locations of vehicles k and k-1 are known from GPS and the relative distance $\Delta p$ - GPS between them may then be calculated. Vehicle k-1 uses radar to measure the relative distance $\Delta p_{rel}$. The FUSION unit determines whether the measurements pertain to the same vehicle. The length $l_k$ of vehicle k may then be determined by subtracting $\Delta p_{rel}$ from $\Delta p$ - GPS, as illustrated in Figure 4A. This length is then assumed to be the vehicle's actual length and may therefore be determined while it is in motion. This now predetermined length is then preferably compared continuously with new calculated values for the length $l_k$ vehicle k. A difference may be calculated and if it is greater than a predetermined threshold value it is assumed that another vehicle has moved in between vehicles k and k-1, as illustrated in Figure 4B. The difference signal thus indicates that an unknown vehicle has moved in between the two vehicles. This information about an unknown vehicle may further be verified by calculating for the estimation a check value, as previously described. The check value may for example be in the form of a covariance for the vehicle length $l_i$, where k=i. A covariance greater than a predetermined threshold value will indicate that the information from the two sources does not come from the same vehicle. The regulator may use this information to regulate the rear vehicle so that the distance between it and the unknown vehicle increases.

In vehicles, the vehicle's position is often given by an embedded positioning unit, such as a GPS unit, which is located under the dashboard of the vehicle. The position of the vehicle is then the position of the vehicle dashboard, which can be approximated to the position of the front of the vehicle in the case of such trucks whose dashboard is near or adjacent to the front of the vehicle. Regardless of where the positioning unit is located, the position of the vehicle is compensated for a possible distance between the positioning unit and the front of the vehicle in order to always get a position on the front part of the vehicle. In this way, the relative distance, $\Delta p$ - GPS can be compensated so that a proper length $l_k$ of the vehicle k can be determined. When the vehicle train includes vehicles of the same kind, such as trucks, the positioning units in vehicles will be located essentially at the same place in the vehicles. Therefore, the relative distance, $\Delta p$ - GPS doesn't need to be compensated for where the positioning units are located to obtain a proper length $l_k$ of the vehicle k, as long as positioning units in vehicles, k and k-1 are located at substantially the same location in each vehicle.

In one embodiment, said estimated vehicle state comprises an estimated speed of the forward vehicle. In this case it is possible to monitor the forward vehicle's speed in order to identify any error in its speed indication. The respective speeds of vehicle k and vehicle k-1 are known from sensor measurements, so the relative speed $\Delta v$ - "wireless" may be calculated after data concerning the speed have been sent wirelessly to the rear vehicle. The relative speed $\Delta v$ - "wireless" is thus vehicle k's speed conveyed wirelessly to vehicle k-1, less the speed of vehicle k-1. Vehicle k-1 then uses for example radar to measure the relative speed $\Delta v_{rel}$. The FUSION unit determins whether the measurements pertain to the same vehicle. If over a certain period of time there is a difference between $\Delta v$ - "wireless" and $\Delta v_{rel}$, there may be an error in the speed indications of either of the vehicles. The difference preferably needs to be greater than a predetermined threshold value for it to be attributable to speed indication error. Speed indication error may further be verified by calculating a check value in the form of the variance of, for example, the difference in relative speed between the vehicles. A covariance greater than a predetermined threshold value will indicate that there is error in the speed indication of either of the vehicles. The regulator may use this information to regulate the rear vehicle so that the spacing between the vehicles is set to a distance which is safe with respect to the erroneous speed indication. Alternatively the vehicles' speeds may be compensated for their erroneous representation.

In the embodiment depicted in Figure 3, the "REG." unit then receives the relative distances $d_{k, k+1}$ between the N vehicles, and the speed $v_k$ of the train's respective vehicles from the FUSION unit. The processor unit is adapted in this embodiment to determining at least one control signal for at least one of the train's vehicles on the basis of the result of the analysis and/or the estimation check value. One or more of the train's vehicles may thus be regulated in response for example to the discovery of an unknown vehicle in the train. In one embodiment the processor unit is adapted to determining one or more control signals to the rear vehicle. In one embodiment control signals are generated by using an MPC algorithm as explained below.

The MPC algorithm is an extension of an LQ regulator and is often used for solving multivariable regulating problems. The LQ regulator minimises a cost function which is described as a linear differential equation. The general quadratic cost function is minimised with respect to the control signal u, e.g. the distance d and/or the speed v, as

$$min \sum_{j=0}^{\infty} \|x(k)\|_{P_1}^2 + \|u(k)\|_{P_2}^2 \qquad (15)$$

in which $P_1$ and $P_2$ are weight matrices and are used to balance how states and the control signal are evaluated. MPC may also handle limitations of the control signal and states, in which case the cost function to be analysed becomes

$$J_{H_p}\big(x(k)\big) = \sum_{j=0}^{H_p-1} \|x(k+j)\|_{P_1}^2 + \|u(k+j)\|_{P_2}^2 \qquad (16)$$

in which $H_p$ is the prediction horizon, and limitations of the spacing between the train's vehicles, their speed and/or engine torque. One embodiment introduces an integrating action in the cost function (13) whereby the difference between two consecutive control signals is minimised. This embodiment results in more uniform regulation, since the control signal is not allowed to vary too much. Output signals from the MPC comprise control signals to other regulators on board the vehicle in the form of a reference speed to the cruise control and/or a reference retardation to the brake system. The regulator will therefore serve as a superordinate regulator over the existing cruise controls and/or brake systems. In one embodiment the system comprises a conversion unit (not depicted) adapted to converting a control signal comprising torque $T_e$ to a suitable control signal for a control unit of a vehicle. The conditions within which this may take place are

$$T_e > -250, \; v_{ref} = v(k+1) \qquad (17)$$

$$T_e \leq -250, \; a_{ref} = \frac{v(k+1)-v(k)}{T_s} \qquad (18)$$

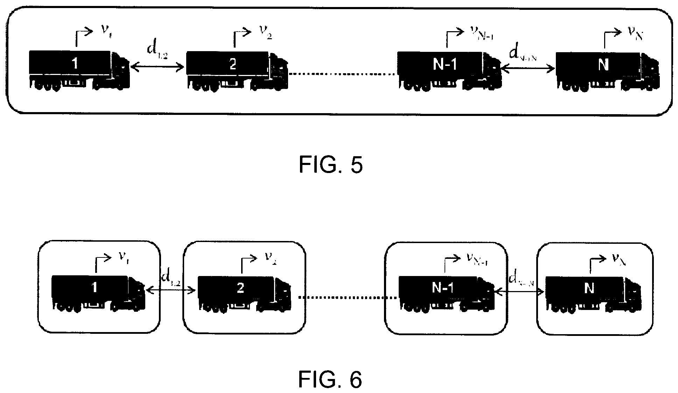

in which $v_{ref}$ is input signal to a cruise control and $a_{ref}$ input signal to a brake system. The values indicated are only to be regarded as examples, and other values are therefore applicable for the invention. Control signals are then sent on from the REG. unit to one or more control units of the vehicle or to control units of other vehicles, depending inter alia on choice of regulating strategy. Figure 5 is a schematic diagram of how centralised control works for N vehicles in a vehicle train. The boundary frame signifies that all of the vehicles have information about all the other vehicles in the train. Each vehicle then solves the same optimisation problem. In other words, each of the train's vehicles calculates an optimum control signal for each vehicle in the train. Fusion and distribution of the optimum control signals are required to achieve a control signal which becomes the actual output signal from the regulator to each control unit of the respective vehicles. Figure 6 is a schematic diagram of how decentralised control works. The boundary frames signify that each vehicle has a description of its own vehicle system and conducts optimisation of its own control signal(s), so the control signal or signals may be used immediately after having been calculated.

The invention relates also to a method in the context of a vehicle train which comprises at least two vehicles adapted to communicating via wireless communication. The method comprises a first step i) of receiving wirelessly from at least the more forward of the two vehicles data which comprise the vehicle's identity and at least one vehicle parameter for the vehicle. The vehicle parameter may for example be a location or speed of the forward vehicle. The method further comprises the second step ii) of measuring a relative vehicle parameter between the rear vehicle and the forward vehicle. The relative vehicle parameter may for example be the distance between the vehicles or the speed difference between them. As a third step iii) a vehicle state for the forward vehicle is estimated on the basis of at least a model of the vehicle and said vehicle parameters. The estimation may be by various methods but has herein been explained on the basis of extended Kalman filtering. In one embodiment the method comprises a fourth step iv) of analysing the estimated vehicle state according to predetermined rules which comprise calculating a difference $\varDelta$ between the estimated state and a predetermined state, comparing the difference $\varDelta$ with a predetermined threshold value and determining a difference signal based on the result of the comparison. The estimated vehicle state comprises for example an estimated length of the forward vehicle. A difference signal indicating that the forward vehicle's length increases beyond a certain threshold value may signify that an unknown vehicle has moved in between the train's two vehicles. That vehicle may then be identified. If the estimated vehicle state comprises an estimated speed of the forward vehicle and there is over a certain period of time a difference between the estimated speed and a predetermined state which exceeds a predetermined threshold value, it may be assumed that there is an error in one of the vehicles' speed representation.

In one embodiment, the method comprises determining for the estimation a check value which indicates whether the wirelessly transmitted information and the relative vehicle parameter originate from the same vehicle. The check value may for example be the variance for the state. It is thus possible to further verify that the length or the speed increases. In one embodiment the method comprises determining at least one control signal for at least one of the train's vehicles on the basis of the result of the analysis and/or the estimation check value. It is thus possible to regulate the train's vehicles in response to detecting an unknown vehicle in the train.

The invention relates also to a computer programme product comprising computer programme instructions for enabling a computer system to perform steps according to the method described above when the programme instructions are run on said computer system. In one embodiment the instructions are stored on a medium which can be read by a computer system.

**Claims**

1. A system in the context of a vehicle train which comprises at least two vehicles adapted to communicating via wireless communication, which system comprises

   - a processor unit adapted for

      - receiving wirelessly from at least the more forward of the two vehicles data which comprise at least one vehicle parameter for the vehicle;
      - receiving data from a detector unit on board the rear vehicle, which detector unit is adapted to measuring a relative vehicle parameter between the forward vehicle and the rear vehicle;

   **characterised in that** the processor unit is adapted for :

      - estimating a vehicle state for the forward vehicle on the basis of at least a model of the vehicle and said vehicle parameters, and generating a state signal which indicates said estimated vehicle state;
      - analysing the estimated vehicle state according to predetermined rules which comprise calculating a difference $\Delta$ between the estimated state and a predetermined state, comparing the difference $\Delta$ with a predetermined threshold value and determining a difference signal based on the result of the comparison.

2. A system according to claim 1, in which said estimated vehicle state comprises an estimated length of the forward vehicle.

3. A system according to any one of the above claims, in which said estimated vehicle state comprises an estimated speed of the forward vehicle.

4. A system according to any one of the above claims, in which the processor unit is adapted for determining for the estimation a check value which indicates whether the wirelessly transmitted information and the relative vehicle parameter originate from the same vehicle.

5. A system according to any one of the above claims, in which the processor unit is adapted for determining at least one control signal for at least one of the train's vehicles on the basis of the result of the analysis and/or the estimation check value.

6. A system according to any one of the above claims, in which the processor unit is adapted for using extended Kalman filtering in said estimation of vehicle states.

7. A method in the context of a vehicle train which comprises at least two vehicles adapted for communicating via wireless communication, which method comprises

   - receiving wirelessly from at least the more forward of the two vehicles data which comprise at least one vehicle parameter for the vehicle;
   - measuring a relative vehicle parameter between the forward vehicle and the rear vehicle;
   - estimating a vehicle state for the forward vehicle on the basis of at least a model of the vehicle and said vehicle parameters;
   - analysing the estimated vehicle state according to predetermined rules which comprise calculating a difference $\Delta$ between the estimated state and a predetermined state, comparing the difference $\Delta$ with a predetermined threshold value and determining a difference signal based on the result of the comparison.

8. A method according to claim 7, in which said estimated vehicle state comprises an estimated length of the forward vehicle.

9. A method according to any one of claims 7 to 8, in which said estimated vehicle state comprises an estimated speed of the forward vehicle.

10. A method according to any one of claims 7 to 9, which comprises determining for the estimation a check value which indicates whether the wirelessly transmitted information and the relative vehicle parameter originate from the same vehicle.

11. A method according to any one of claims 7 to 10, which comprises determining at least one control signal for at least one of the train's vehicles on the basis of the result of the analysis and/or the estimation check value.

12. A method according to any one of claims 7 to 11, which comprises using extended Kalman filtering in said estimation of vehicle states.

13. A computer programme product comprising computer programme instructions for enabling a computer system to perform steps of the method according to any one of claims 7 to 12 when the programme instructions are run on said computer system.

14. A computer programme product according to claim 13, in which the programme instructions are stored on a medium which can be read by a computer system.

**Patentansprüche**

1. System im Zusammenhang mit einem Fahrzeugzug, der zumindest zwei Fahrzeuge umfasst, die zum Kommunizieren mittels Drahtloskommunikation eingerichtet sind, wobei das System aufweist

   - eine Prozessoreinheit, die eingerichtet ist zum:

      - drahtlosen Empfangen von Daten von zumindest dem weiter vorne befindlichen der zwei Fahrzeuge, die wenigstens einen Fahrzeugparameter für das Fahrzeug umfassen,
      - Empfangen von Daten von einer Erfassungseinheit an Bord des hinteren Fahrzeugs, wobei die Erfassungseinheit dazu eingerichtet ist, einen relativen Fahrzeugparameter zwischen dem vorderen Fahrzeug und dem hinteren Fahrzeug zu messen,
      **dadurch gekennzeichnet, dass** die Prozessoreinheit eingerichtet ist zum
      - Abschätzen eines Fahrzeugzustands für das vordere Fahrzeug basierend auf wenigstens einem Modell des Fahrzeugs und den Fahrzeugparametern und Erzeugen eines Zustandssignals, welches den abgeschätzten Fahrzeugzustand angibt,
      - Analysieren des abgeschätzten Fahrzeugzustandes gemäß vorbestimmter Regeln, welche umfassen ein Berechnen einer Differenz $\Delta$ zwischen dem abgeschätzten Zustand und einem vorbestimmten Zustand, Vergleichen der Differenz $\Delta$ mit einem vorbestimmten Schwellenwert und Ermitteln eines Differenzsignals basierend auf dem Ergebnis des Vergleichs.

2. System nach Anspruch 1, bei dem der abgeschätzte Fahrzeugzustand eine geschätzte Länge des vorderen Fahrzeugs umfasst.

3. System nach einem der vorhergehenden Ansprüche, bei dem der abgeschätzte Fahrzeugzustand eine geschätzte Geschwindigkeit des vorderen Fahrzeugs umfasst.

4. System nach einem der vorhergehenden Ansprüche, bei dem die Prozessoreinheit dazu eingerichtet ist, für die Abschätzung einen Kontrollwert zu bestimmen, der angibt, ob die drahtlos übertragene Information und der relative Fahrzeugparameter von demselben Fahrzeug stammen.

5. System nach einem der vorhergehenden Ansprüche, bei dem die Prozessoreinheit dazu eingerichtet ist, wenigstens ein Kontrollsignal für zumindest eines der Fahrzeuge des Zugs basierend auf dem Ergebnis der Analyse und/oder dem Abschätzungskontrollwert zu bestimmen.

6. System nach einem der vorhergehenden Ansprüche, bei dem die Prozessoreinheit dazu eingerichtet ist, bei der Abschätzung von Fahrzeugzuständen eine erweiterte Kalman-Filterung zu verwenden.

7. Verfahren im Zusammenhang mit einem Fahrzeugzug, der zumindest zwei Fahrzeuge umfasst, die zum Kommunizieren mittels Drahtloskommunikation eingerichtet sind, wobei das Verfahren umfasst:

- drahtloses Empfangen von Daten von zumindest dem weiter vorne befindlichen der zwei Fahrzeuge, die wenigstens einen Fahrzeugparameter für das Fahrzeug umfassen,
- Messen eines relativen Fahrzeugparameters zwischen dem vorderen Fahrzeug und dem hinteren Fahrzeug,
- Abschätzen eines Fahrzeugzustands für das vordere Fahrzeug basierend auf wenigstens einem Modell des Fahrzeugs und den Fahrzeugparametern,
- Analysieren des abgeschätzten Fahrzeugzustands gemäß vorbestimmter Regeln, welche umfassen ein Berechnen einer Differenz $\varDelta$ zwischen dem abgeschätzten Zustand und einem vorbestimmten Zustand, Vergleichen der Differenz $\varDelta$ mit einem vorbestimmten Schwellenwert und Ermitteln eines Differenzsignals basierend auf dem Ergebnis des Vergleichs.

8. Verfahren nach Anspruch 7, bei dem der abgeschätzte Fahrzeugzustand eine geschätzte Länge des vorderen Fahrzeugs umfasst.

9. Verfahren nach einem der Ansprüche 7 bis 8, bei dem der abgeschätzte Fahrzeugzustand eine geschätzte Geschwindigkeit des vorderen Fahrzeugs umfasst.

10. Verfahren nach einem der Ansprüche 7 bis 9, welches umfasst ein Bestimmen eines Kontrollwertes für die Abschätzung, der angibt, ob die drahtlos übertragene Information und der relative Fahrzeugparameter von demselben Fahrzeug stammen.

11. Verfahren nach einem der Ansprüche 7 bis 10, welches umfasst ein Bestimmen wenigstens eines Kontrollsignals für zumindest eines der Fahrzeuge des Zugs basierend auf dem Ergebnis der Analyse und/oder dem Abschätzungskontrollwert.

12. Verfahren nach einem der Ansprüche 7 bis 12, welches umfasst ein Verwenden einer erweiterten Kalman-Filterung bei der Abschätzung von Fahrzeugzuständen.

13. Computerprogrammprodukt umfassend Computerprogrammanweisungen, um ein Computersystem zu befähigen, Schritte des Verfahrens nach einem der Ansprüche 1 bis 12 auszuführen, wenn die Programmanweisungen auf dem Computersystem ablaufen.

14. Computerprogrammprodukt nach Anspruch 13, bei dem die Programmanweisungen auf einem Medium gespeichert sind, das von einem Computersystem gelesen werden kann.

**Revendications**

1. Système dans le contexte d'un train de véhicule qui comprend au moins deux véhicules adaptés à la communication via une communication sans fil, lequel système comprend

- une unité de processeur adaptée pour

- la réception sans fil d'au moins le plus avant des deux véhicules, de données qui comprennent au moins un paramètre de véhicule pour le véhicule ;
- la réception de données d'une unité de détecteur à bord du véhicule arrière, laquelle unité de détecteur est adaptée à la mesure d'un paramètre de véhicule relatif entre le véhicule avant et le véhicule arrière ;

**caractérisé en ce que** l'unité du processeur est adaptée pour :

- l'estimation d'un état de véhicule pour le véhicule avant sur base d'au moins un modèle du véhicule et lesdits paramètres de véhicule, et la génération d'un signal d'état qui indique ledit état estimé du véhicule ;
- l'analyse de l'état estimé du véhicule selon les règles prédéterminées qui comprennent le calcul d'une différence $\varDelta$ entre l'état estimé et un état prédéterminé, par la comparaison de la différence $\varDelta$ avec une valeur seuil prédéterminée et la détermination d'un signal de différence sur base du résultat de la comparaison.

2. Système selon la revendication 1, dans lequel ledit état estimé du véhicule comprend une longueur estimée du véhicule avant.

**3.** Système selon l'une quelconque des revendications précédentes, dans lequel ledit état estimé du véhicule comprend une vitesse estimée du véhicule avant.

**4.** Système selon l'une quelconque des revendications précédentes, dans lequel l'unité de processeur est adaptée pour la détermination de l'estimation d'une valeur de contrôle indiquant si les informations transmises sans fil et le paramètre de véhicule relatif proviennent du même véhicule.

**5.** Système selon l'une quelconque des revendications précédentes, dans lequel l'unité du processeur est adaptée pour la détermination d'au moins un signal de contrôle pour au moins un des véhicules du train sur base du résultat de l'analyse et/ou de la valeur de contrôle d'estimation.

**6.** Système selon l'une quelconque des revendications précédentes, dans lequel l'unité de processeur est adaptée pour l'utilisation d'un filtrage de Kalman étendu dans lesdits états d'estimation de véhicules.

**7.** Procédé dans le contexte d'un train de véhicule qui comprend au moins deux véhicules adaptés pour la communication via une communication sans fil, lequel procédé comprend

- la réception sans fil d'au moins le plus avant des deux véhicules, de données qui comprennent au moins un paramètre de véhicule pour le véhicule ;
- la mesure d'un paramètre relatif du véhicule entre le véhicule avant et le véhicule arrière ;
- l'estimation d'un état de véhicule pour le véhicule avant sur base d'au moins un modèle du véhicule et lesdits paramètres du véhicule ;
- l'analyse de l'état estimé du véhicule selon les règles prédéterminées qui comprennent le calcul d'une différence $\Delta$ entre l'état estimé et un état prédéterminé, par la comparaison de la différence $\Delta$ avec une valeur seuil prédéterminée et la détermination d'un signal de différence sur base du résultat de la comparaison.

**8.** Procédé selon la revendication 7, dans lequel ledit état estimé du véhicule comprend une longueur estimée du véhicule avant.

**9.** Procédé selon l'une quelconque des revendications 7 à 8, dans lequel ledit état estimé du véhicule comprend une vitesse estimée du véhicule avant.

**10.** Procédé selon l'une quelconque des revendications 7 à 9, qui comprend la détermination de l'estimation d'une valeur de contrôle indiquant si les informations transmises sans fil et le paramètre de véhicule relatif proviennent du même véhicule.

**11.** Procédé selon l'une quelconque des revendications 7 à 10, qui comprend la détermination d'au moins un signal de contrôle pour au moins un des véhicules du train sur base du résultat de l'analyse et/ou de la valeur de contrôle d'estimation.

**12.** Procédé selon l'une quelconque des revendications 7 à 11, qui comprend l'utilisation d'un filtrage de Kalman étendu dans ladite estimation des états de véhicule.

**13.** Produit de programme informatique comprenant des instructions de programme informatique pour permettre à un système informatique d'exécuter des étapes du procédé selon l'une quelconque des revendications 7 à 12, lorsque les instructions de programme sont exécutées sur ledit système informatique.

**14.** Produit de programme informatique selon la revendication 13, dans lequel les instructions de programme sont stockées sur un support qui peut être lu par un système informatique.

FIG. 1

FIG. 2

FIG. 3

FIG. 4A

FIG. 4B

FIG. 5

FIG. 6

RECEIVE
WIRELESS
DATA

MEASURE
RELATIVE VEHCLE
PARAMETER

ESTIMATE A
STATE

FIG. 7

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2008186382 A1

- US 8077077 B2

**Non-patent literature cited in the description**

- Sensor Fusion for Vehicular Networks Master Thesis in Communication Engineering. *NAGA VISHNU-KANTH IRUKULAPATI*